# EUROPEAN PATENT SPECIFICATION

(11) **EP 3 477 764 B1**
(45) Date of publication and mention of the grant of the patent: **10.03.2021**
(21) Application number: 18201360.7
(22) Date of filing: 18.10.2018
(51) Int. Cl.: H01M 10/615, H01M 10/6569, H01M 10/667, H01M 10/617, H01M 10/613, B60H 1/00

(54) **BATTERY ENERGY STORAGE SYSTEM WITH TWO-PHASE COOLING**
BATTERIEENERGIESPEICHERSYSTEM MIT ZWEIPHASIGER KÜHLUNG
SYSTÈME DE STOCKAGE D'ÉNERGIE DE BATTERIE AVEC REFROIDISSEMENT À DEUX PHASES

(30) Priority: 27.10.2017 EP 17198791
(43) Date of publication of application: 01.05.2019
(73) Proprietor: ABB Schweiz AG, 5400 Baden (CH)
(72) Inventor: PATEY, Timothy, 8004 Zürich (CH); SOLOGUBENKO, Oleksandr, 8906 Bonstetten (CH); FLUECKIGER, Reto, 8055 Zürich (CH)
(74) Representative: Qip Patentanwälte Dr. Kuehn & Partner mbB

(56) References cited:
- WO-A1-2017/028033
- DE-A1-102013 212 837
- DE-A1-102016 202 750
- JP-A- 2006 120 334
- US-A1- 2011 000 241
- US-A1- 2016 344 074

## Description

### FIELD OF THE INVENTION

The invention relates to the field of thermal management of rechargeable batteries. In particular, the invention relates to a battery energy storage system, an electrical vehicle, a photovoltaic system and a method for controlling a battery energy storage system.

### BACKGROUND OF THE INVENTION

Rechargeable batteries, such as Li-ion batteries, are used in photovoltaic applications and electric vehicles for buffering electrical energy. The thermal management of Li-ion batteries (and other types of recharge batteries with other chemistries) is one of the key challenges in battery integration. Conventional air cooling often leads to an inhomogeneous temperature distribution within the battery.

US 2012 183 830 A describes a battery with a housing partially filled with a cooling fluid that for cooling the battery evaporates within the housing.

WO 2014 186 044 A1 describes a battery cooling method and system based on a cooling fluid.

US 2011/000241 A1 shows a cooling cycle for an electric vehicle, which comprises two evaporators connected in parallel for cooling a converter and a battery. It is mentioned that for the converter, evaporation of a refrigeration fluid may occur within a thermally insulating case.

DE 10 2016 202 750 A1 shows a cooling device for an electric vehicle, in which battery cells are cooled with a cooling plate and power electronics is cooled with a cooling element.

US 2016/344 074 A1 shows a vehicle with a battery and a converter cooled by a cooling loop. The converter is cooled with cooler, in which a phase change may take place. The battery is thermally coupled to the cooling loop.

DE 10 2013 212837 A1 relates to a heating and cooling circuit for an electric vehicle, which cools a battery and power electronic components.

JP 2006 120 334 A relates to a vehicle mounted battery temperature management apparatus, in which an engine, a motor generator and a battery are cooled. The battery and the motor generator are cooled with air conducted in a cooling circuit.

### DESCRIPTION OF THE INVENTION

It is an objective of the invention to maintain a homogeneous cell temperature distribution in a battery storage system in an economical and reliable way.

This objective is achieved by the subject-matter of the independent claims. Further exemplary embodiments are evident from the dependent claims and the following description.

An aspect of the invention relates to a battery energy storage system. A battery storage system comprises a rechargeable battery, such as an Li-ion battery, and further components for supplying the battery with DC current, for example from an AC grid, an AC source or a DC source and for converting a DC current from the battery into an AC or DC current to be supplied to a load. The battery energy storage system may be provided as one device, i.e. the components of the battery energy storage system may be mechanically interconnected with each other. Alternatively, the battery energy storage system may be provided by several devices, i.e. some components of the battery energy storage system solely may be connected via electrical cables and/or fluid lines.

The battery energy storage system furthermore comprises a converter for converting a DC current from the battery into a current to be supplied to a load and for converting a current from a source into a DC current to be supplied to the rechargeable battery. For example, the converter may be an AC-to-DC converter or DC-to-DC converter. The source may be an electrical grid, an electrical generator and/or a photovoltaic panel. The load may be an electrical grid or an electrical motor.

The converter may comprise semiconductor switches, such as transistors or thyristors, which, when switched, generate losses and heat. This heat may be conveyed away by the cooling fluid.

The battery energy storage system furthermore comprises a closed cooling circuit for cooling the rechargeable battery and the converter with a cooling fluid adapted for performing a phase change, when heated by at least one of the rechargeable battery and the converter, wherein the cooling circuit interconnects a cooling component for the rechargeable battery and a cooling component for the converter.

The battery energy storage system has a thermal management using a two-phase cooling system, which is used for cooling both the rechargeable battery and the converter. The same cooling fluid and the same cooling circuit is used for cooling and heating. Both cooling components of the rechargeable battery and the converter are connected to a single cooling circuit. The cooling components may be in communication via one or more lines of the cooling circuit.

This may reduce costs of battery energy storage system and may improve the thermal management of the rechargeable battery, since the fluid temperature may be uniquely determined by the fluid pressure. Due to the single circuit, the pressure may be the same in the whole system and a homogeneous cooling fluid temperature may be achieved.

The cooling fluid may be a liquid, which transforms into a gas, when heated by the rechargeable battery and/or the converter. Additionally, the cooling fluid may be electrically isolating.

A closed cooling circuit may be a cooling circuit, which is not in communication with the environment of the battery energy storage system. No cooling fluid may enter or exit the cooling circuit.

The rechargeable battery is composed of a plurality of battery cells, wherein the cooling component for the reachable battery is a sealed housing, in which the battery cells and their electrical interconnections are accommodated. The battery cells and the electrical interconnections are at least partially or completely immersed in the cooling fluid in the sealed housing for two-phase cooling.

Thus, the rechargeable battery is at least partially or completely immersed in the cooling fluid within the sealed housing as cooling component. The rechargeable battery, the battery cells and the electrical interconnections are cooled by immersion two-phase cooling. All the battery cells may be at least partially or completely immersed in the cooling fluid. Differences in battery cell temperatures may be balanced.

Two-phase cooling means that the cooling fluid undergoes a phase change inside the sealed housing, in particular, when components (here the battery cells and the electrical interconnections) inside the sealed housing heat the cooling fluid above a temperature, at which the phase change takes place. The sealed housing may be seen as an evaporator. Thus, the rechargeable battery, its battery cells and the electrical interconnections may be accommodated inside an evaporator.

The electrical interconnections of the battery cells and/or the rechargeable battery with the converter may be covered with the cooling fluid and are at least partially immersed in the cooling fluid. Heat generated in these interconnections may be large, especially at occasional bad electric contacts. An overheating of a badly contacted converter cell and a fast aging of the rechargeable battery may be avoided.

According to an embodiment of the invention, the cooling component for the rechargeable battery is connected in parallel to the cooling component for the converter. For example, the liquid cooling fluid, for example from a pump, may enter a common input line, which splits into two input lines, one running to the rechargeable battery and the other one running to the converter. Two output lines may leave the rechargeable battery and the converter and may lead into one common output line which is connected to a condenser. With a flow regulator interconnecting the common input line with the dedicated input lines, the amount of cooling fluid to the converter and the rechargeable battery may be controlled.

According to an embodiment of the invention, the converter comprises an evaporator as cooling component, which is in thermal contact with power semiconductors of the converter. The semiconductor switches may be cooled with an evaporator, in which the cooling fluid may transform into a gas, when heated by the thermal losses generated by the semiconductor switches. A forced flow of the liquid phase of the cooling fluid may be generated through the evaporator. Thus, the converter may be cooled by forced two-phase cooling. The evaporator may be a multiport evaporator, i.e. may have a plurality of channels for increasing its surface.

By efficiently cooling the converter, heat from localized losses with high heat flux density may be fast transferred into the cooling fluid and an overheating of semiconductors shortening their lifetime may be avoided.

According to an embodiment of the invention, the cooling circuit comprises a flow regulator for regulating an amount of cooling fluid flowing to the rechargeable battery and an amount of cooling fluid flowing to the converter. According to the invention, a controller measures a temperature of the rechargeable battery and a temperature of the converter. Based on these two temperatures, the controller may actuate the flow regulator. The amount of cooling fluid flowing from the flow regulator to the rechargeable battery and the converter may be controlled in this way. In the extreme, only the rechargeable battery or the converter may be supplied with cooling fluid.

According to an embodiment of the invention, the cooling circuit comprises a supply line interconnecting an output line of the cooling component of the converter with an input line of the cooling component of the rechargeable battery. In such a way, the converter may be used for heating the rechargeable battery, which may be beneficial, when the battery is cold. Losses in the converter may heat the cooling fluid and the heated cooling fluid may be conveyed through the supply line to the rechargeable battery.

At least one valve may be arranged in the supply line for preventing a cooling fluid flow through the supply line. This valve may be controlled by a controller, which controls the temperature of the rechargeable battery. It may be that the valve is an adjustable valve, with which the amount of cooling fluid to the rechargeable battery can be controlled.

According to an embodiment of the invention, the cooling circuit comprises an electrical heater upstream of the cooling component of the rechargeable battery. The heater may be supplied with electrical power from the battery and/or from another source, such as an electrical grid. For example, a heating of the battery may be beneficial in the case of a cold start, when the rechargeable battery is stored outdoors.

According to an embodiment of the invention, the cooling circuit comprises a pump for pumping the cooling fluid through the cooling component of the rechargeable battery and the cooling component of the converter. The pump may be controlled by a controller based on the temperature of the rechargeable battery and/or the converter. It may be that cooling and/or heating only takes place, when the temperature of the rechargeable battery and/or the converter is outside of a temperature interval.

According to an embodiment of the invention, the cooling circuit comprises a condenser for liquidising evaporated cooling fluid from the cooling component of the rechargeable battery and the cooling component of the converter. Only one condenser for condensing the cooling fluid from both cooling components may be necessary.

In summary, both the immersion and forced cooling components may be connected to a single fluid circuit, which may comprise a pump and/or condenser.

A further aspect of the invention relates to an electrical vehicle, which comprises a battery energy storage system as described in the above and in the following. The electrical vehicle furthermore may comprise a drive supplied by the converter with electrical power from the rechargeable battery. Also, in a recuperation mode, the rechargeable battery may be charged by the drive.

A further aspect of the invention relates to a photovoltaic system, which comprises a battery energy storage system as described in the above and in the following. The photovoltaic system furthermore may comprise a photovoltaic panel supplying the rechargeable battery with electrical power via the converter. For example, the photovoltaic system may supply a house with electrical power and the rechargeable battery may be used for buffering electrical energy.

In both applications, the cooling and/or heating circuit may have the advantage that outdoor temperatures may be balanced. When the rechargeable battery is exposed to outdoor temperatures, the daily outdoor temperature cycle may be detrimental to the aging of the battery.

For example, for photovoltaic systems, a low temperature in the morning, when charging, may result in a high degrading and a high temperature around noon, when usually a discharge peak occurs additionally may contribute to the degrading. These temperature differences may be balanced with cooling and/or heating of the rechargeable battery. The battery energy storage system as described herein may extend the lifetime of the rechargeable battery and the converter, especially in the event of cold weather surrounding a battery situated outdoors.

A further aspect of the invention relates to a method for controlling the battery energy storage system as described in the above and in the following. The method may be performed automatically by a controller of the battery energy storage system. The controller also may be adapted for controlling a switching of the converter.

It has to be understood that features of the method as described in the above and in the following may be features of the battery energy storage system as described in the above and in the following, and vice versa.

According to the invention, the method comprises: determining a temperature of the rechargeable battery and a temperature of the converter. For example, temperature sensors may be provided in the rechargeable battery and the converter. The controller may evaluate the signals from the temperature sensors and may determine, whether a cooling and/or heating is necessary.

According to the invention, the method comprises: controlling a cooling fluid flow through the rechargeable battery and the converter based on the temperature of the rechargeable battery and the temperature of the converter. In the case, the rechargeable battery and/or the converter needs cooling and/or heating, the controller may activate a pump, which pumps the cooling fluid through the cooling circuit. When the pump is active, the converter and/or the rechargeable battery are usually cooled to a temperature, when the cooling fluid changes phase.

According to the invention, the method comprises: actively heating the cooling fluid, when the temperature of the rechargeable battery is below a threshold temperature. It may be that the rechargeable battery has to be heated, for example, for increasing its power output or when the rechargeable battery is charged fast.

According to an embodiment of the invention, the method further comprises: controlling an amount of cooling fluid flowing to the rechargeable battery based on the temperature of the rechargeable battery; and controlling an amount of cooling fluid flowing through the converter based on the temperature of the converter. A flow regulator, such as a three-way valve, may control the amount of cooling fluid towards the cooling component of the rechargeable battery and the cooling component of the converter. When more cooling may be necessary for the converter, then more cooling fluid may be conveyed to the converter than to the rechargeable battery, and vice versa.

According to the invention, the cooling fluid is heated by flowing through the converter, which is controlled to generate waste heat. It may be that the rechargeable battery is heated with the converter. The generator is controlled by the controller to generate losses, which heat the cooling fluid. This may be either a normal operation mode of the converter, in which it is switched to generate as less losses as possible, or a special heating operation mode, in which high losses are generated intentionally. For example, this may be achieved by switching as much as possible.

A supply line between the converter and the rechargeable battery may be opened by the controller, such that heated cooling fluid from the converter directly enters the cooling component of the rechargeable battery.

According to an embodiment of the invention, the cooling fluid is heated with an electrical heater, which is supplied with electrical energy from the rechargeable battery. Additionally to the heating with the converter, the cooling fluid, which is conveyed through the cooling component of the rechargeable battery, may be heated with an electrical heater. The heater may be supplied with electrical power from the rechargeable battery. However, it is also possible that the heater is supplied from another source, such as an electrical grid.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a photovoltaic system according to an embodiment of the invention.
Fig. 2 schematically shows an electric vehicle according to an embodiment of the invention.
Fig. 3 schematically shows a battery energy storage system according to an embodiment of the invention.
Fig. 4 shows a flow diagram for a method for controlling a battery energy storage system according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

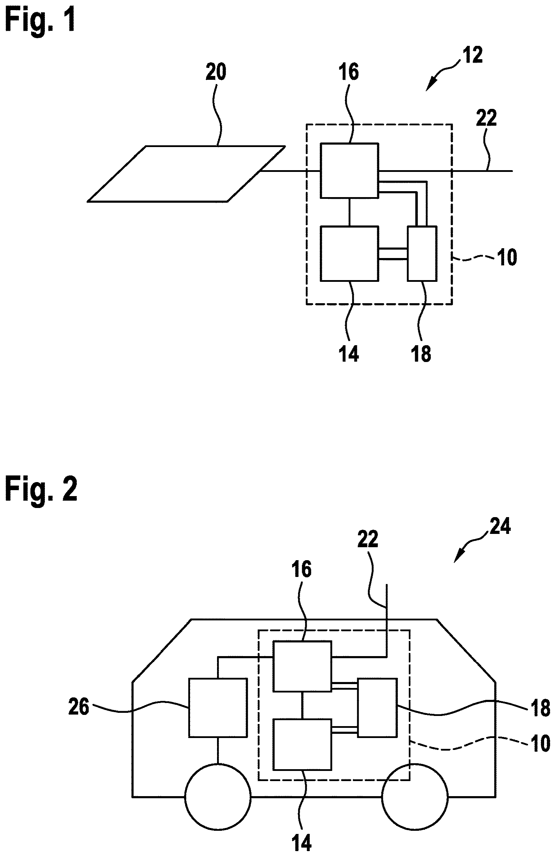

Fig. 1 shows a battery energy storage system 10, which is part of a photovoltaic system 12.

The battery energy storage system 10 comprises a rechargeable battery 14, a converter 16 and a cooling circuit 18. The converter 16 is connected to a photovoltaic panel 20 and to an electrical grid 22. The converter 16 may convert the DC current from the photovoltaic panel 20 into a DC current to be supplied to the battery 14 and thus may charge the battery 14. Furthermore, the converter 16 may convert the DC current from the photovoltaic panel 20 and/or the battery 14 into an AC current to be supplied to the electrical grid 22. For example, the loads of a house or other building may be supplied with the photovoltaic system 12.

Fig. 2 shows a battery energy storage system 10, which is part of an electric vehicle 24. The electric vehicle 24 may be a train, tram, bus or car.

The converter 16 may convert the DC current from the battery 14 into an AC current to be supplied to a drive 26 of the electric vehicle 24 and may convert an AC current from the drive 26 working in generator mode into a DC current for the battery 14 and thus may charge the battery 14. Furthermore, the converter 16 may be an AC current from an electrical grid 22 into an AC current to be supplied to the drive 26 and/or in a DC current to be supplied to the battery 14 for charging the battery 14.

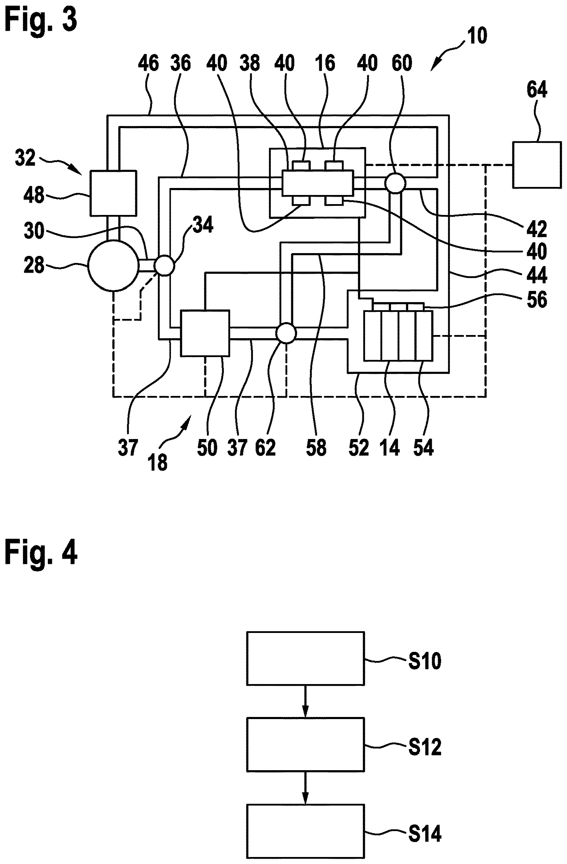

Fig. 3 shows a battery energy storage system 10 in more detail. The closed cooling circuit 18 comprises a pump 28, which supplies an input line 30 with cooling fluid 32. The input line 30 leads into a flow regulator 34, which may be a controllable three-way valve and/or which supplies two further input lines 36, 37.

The input line 36 supplies a cooling component 38 of the converter 16 with cooling fluid 32. The cooling component 38 may be an evaporator 38, which is in direct thermal contact with semiconductor elements 40 of the converter 16. The cooling component 38 is connected with an output line 42, which unites with an output line 44 from the rechargeable battery 14 into a line 46, which leads into a condenser 48 that supplies the pump 28 with liquidised cooling fluid.

The input line 37 comprises an electrical heater 50 and supplies a cooling component 52 of the rechargeable battery 14. The cooling component 52 is a sealed housing 52, in which the battery cells 54 of the rechargeable battery 14 and their electrical interconnections 56, such as contact, bus bars, etc., are accommodated. In the housing 52, the battery cells 54 and the electrical interconnections 56 are partially or completely immersed in the cooling fluid.

The cooling component 52 of the rechargeable battery 14 is connected via the output line 44 with the output line 42 of the cooling component 38 of the converter 16 and with the line 46 to the condenser 48.

The cooling fluid 32 may be a two-phase cooling fluid adapted for going from a liquid phase into a gaseous phase in the cooling components 38, 52 and for going from the gaseous phase into the liquid phase in the condenser 48. Furthermore, the cooling fluid 32 may be electrically isolating.

The cooling circuit furthermore may comprise a supply line 58, which connects the output line 42 from the cooling component 38 of the converter with the input line 37 to the cooling component of the rechargeable battery 14. With the supply line 58, heated cooling fluid 32 from converter 16 can be used for heating the rechargeable battery 14.

The supply line 58 may be connected with a valve 60 to the output line 42 and with a valve 62 to the input line 37. In such a way, the flow of the cooling fluid from the converter 14 to the rechargeable battery 14 can be controlled.

During operation of the cooling circuit 18, which may be controlled by a controller 62, the pump 28 may pump cooling fluid through the cooling circuit 18, which may then be supplied to the cooling components 38, 52 connected in parallel in the cooling circuit 18. When the temperature of the converter 16 and/or the rechargeable battery 14 is high enough, the cooling fluid 32 evaporates into the gaseous phase, which is then returned to the condenser 48, which condenses the cooling fluid 32 into the liquid phase.

Fig. 4 shows a method for controlling the battery energy storage system 10 shown in Fig. 3.

In step S10, the controller 64 determines a temperature of the rechargeable battery 14 and a temperature of the converter 16. A temperature sensor may be provided in the rechargeable battery 14 and in the converter 16. The controller 64 determines whether the temperature of the converter 16 is above a converter threshold temperature and whether the temperature of the rechargeable battery 14 is between a lower battery threshold temperature and an upper battery threshold temperature. When both conditions are met, the controller 64 deactivates the pump 28.

If one or both conditions are not met, the controller 64 activates the pump and controls a cooling fluid flow through the rechargeable battery 14 and the converter based on the measured temperature of the rechargeable battery 14 and the measured temperature of the converter 16.

In step S12, the controller controls an amount of cooling fluid 32 flowing to the rechargeable battery 14 based on the temperature of the rechargeable battery 14 and an amount of cooling fluid 32 flowing through the converter 16 based on the temperature of the converter 16. Based on the measured temperatures, the cooling fluid flow from the pump 28 to the cooling components 38, 52 may be adjusted with the flow regulator 34. As higher the cooling demand of the respective component 38, 52, as higher the amount of cooling fluid conveyed to the respective component 38, 52 may be set. This may be controlled by controlling the speed of the pump 28 and the position of the flow regulator 34.

In step S14, the controller 64 actively heats the cooling fluid 32, when the temperature of the rechargeable battery 14 is below the lower battery threshold temperature. It has to be noted that the amount of cooling fluid conveyed to the cooling component 52 of the rechargeable battery 14 also may be controlled in step S12 based on a heating demand of the rechargeable battery 14.

The cooling fluid is heated with the converter 16 and, optionally, with the heater 50.

For heating with the converter 16, the controller 64 operates the converter 16 in such a way that losses are produced, which heat the cooling fluid through the converter 16. It may be that the converter 16 is operated in a special heating mode, in which more losses are produced as in a normal operation mode. The losses generate waste heat that is transferred by the cooling component 38 into cooling fluid 32.

The valves 60 and 62 are adjusted by the controller 64 that the heated cooling fluid 32 from the converter 16 flows through the supply line 58 into the cooling component 52 of the rechargeable battery 14.

It may be that, when the heat from the converter 16 is not enough to heat the rechargeable battery 14, the heater 50 is activated by the controller 64 to generate further heat. In any case, the heater 50 may be powered with electrical energy from the rechargeable battery 14.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: battery energy storage system
- 12: photovoltaic system
- 14: rechargeable battery
- 16: electrical converter
- 18: cooling circuit
- 20: photovoltaic panel
- 22: electrical grid
- 24: electric vehicle
- 26: drive
- 28: pump
- 30: input line
- 32: cooling fluid
- 34: flow regulator
- 36: input line
- 37: input line
- 38: first cooling component, evaporator
- 40: semiconductor element
- 42: output line
- 44: output line
- 46: output line
- 48: condenser
- 50: electrical heater
- 52: second cooling component, sealed housing
- 54: battery cell
- 56: electrical interconnection
- 58: supply line
- 60: valve
- 62: valve
- 64: controller

## Claims

1. A battery energy storage system (10), comprising:
a rechargeable battery (14);
a converter (16) for converting a DC current from the rechargeable battery (14) into a current to be supplied to a load (22, 26) and for converting a current from a source (20, 22, 26) into a DC current to be supplied to the rechargeable battery (14);
a closed cooling circuit (18) for cooling the rechargeable battery (14) and the converter (16) with a cooling fluid (32) adapted for performing a phase change, when heated by at least one of the rechargeable battery (14) and the converter (16);
a controller for controlling the battery storage system (10);
wherein the cooling circuit (18) interconnects a cooling component (52) for the rechargeable battery (14) and a cooling component (38) for the converter (16);
wherein the rechargeable battery is composed of a plurality of battery cells (54);
wherein the cooling component (52) for the rechargeable battery (14) is a sealed housing (52), in which the battery cells (54) and their electrical interconnections (56) are accommodated;
wherein the battery cells (54) and the electrical interconnections (56) are at least partially immersed in the cooling fluid (32) in the sealed housing (52) for two-phase cooling;
wherein the controller is adapted for:
determining a temperature of the rechargeable battery (14) and a temperature of the converter (16);
controlling a cooling fluid flow through the rechargeable battery (14) and the converter based on the temperature of the rechargeable battery (14) and the temperature of the converter (16);
actively heating the cooling fluid (32), when the temperature of the rechargeable battery (14) is below a threshold temperature, wherein the cooling fluid (32) is heated by flowing through the converter (16), which is controlled to generate waste heat.

2. The battery energy storage system (10) of claim 1,
wherein the cooling component (52) for the rechargeable battery (14) is connected in parallel to the cooling component (38) for the converter (16).

3. The battery energy storage system (10) of one of the previous claims,
wherein the converter (16) comprises an evaporator as cooling component (38), which is in thermal contact with power semiconductor elements (40) of the converter (16).

4. The battery energy storage system (10) of one of the previous claims,
wherein the cooling circuit (18) comprises a flow regulator (34) for regulating an amount of cooling fluid (32) flowing to the rechargeable battery (14) and an amount of cooling fluid (32) flowing to the converter (16).

5. The battery energy storage system (10) of one of the previous claims,
wherein the cooling circuit (18) comprises a supply line (58) interconnecting an output line (42) of the cooling component (38) of the converter (16) with an input line (37) of the cooling component (52) of the rechargeable battery (14);
wherein at least one valve (60, 62) is arranged in the supply line (58) for preventing a cooling fluid flow through the supply line (58).

6. The battery energy storage system (10) of one of the previous claims,
wherein the cooling circuit (18) comprises an electrical heater (50) upstream of the cooling component (52) of the rechargeable battery (14).

7. The battery energy storage system (10) of one of the previous claims,
wherein the cooling circuit (18) comprises a pump (28) for pumping the cooling fluid (32) through the cooling component (52) of the rechargeable battery (14) and the cooling component (38) of the converter (16).

8. The battery energy storage system (10) of one of the previous claims,
wherein the cooling circuit (18) comprises a condenser (48) for liquidising evaporated cooling fluid (32) from the cooling component (52) of the rechargeable battery (14) and the cooling component (38) of the converter (16).

9. An electrical vehicle (24), comprising:
a battery energy storage system (10) according to one of the previous claims;
a drive (26) supplied by the converter (16) with electrical power from the rechargeable battery (14).

10. A photovoltaic system (12), comprising:
a battery energy storage system (10) according to one of claims 1 to 9;
a photovoltaic panel (20) supplying the rechargeable battery (14) with electrical power via the converter (16).

11. A method for controlling the battery energy storage system (10) of one of claims 1 to 8, the method comprising:
determining a temperature of the rechargeable battery (14) and a temperature of the converter (16);
controlling a cooling fluid flow through the rechargeable battery (14) and the converter based on the temperature of the rechargeable battery (14) and the temperature of the converter (16);
actively heating the cooling fluid (32), when the temperature of the rechargeable battery (14) is below a threshold temperature,
**characterized in that** the cooling fluid (32) is heated by flowing through the converter (16), which is controlled to generate waste heat.

12. The method of claim 11, further comprising:
controlling an amount of cooling fluid (32) flowing to the rechargeable battery (14) based on the temperature of the rechargeable battery (14);
controlling an amount of cooling fluid (32) flowing through the converter (16) based on the temperature of the converter (16).

13. The method of claim 11 or 12,
wherein the cooling fluid (32) is heated with an electrical heater (50), which is supplied with electrical energy from the rechargeable battery (14).

## Patentansprüche

1. Batterieenergiespeichersystem (10), umfassend:
eine wiederaufladbare Batterie (14);
einen Wandler (16) zum Umwandeln eines Gleichstroms von der wiederaufladbaren Batterie (14) in einen einer Last (22, 26) zuzuführenden Strom und zum Umwandeln eines Stroms von einer Quelle (20, 22, 26) in einen der wiederaufladbaren Batterie (14) zuzuführenden Gleichstrom;
einen geschlossenen Kühlkreislauf (18) zum Kühlen der wiederaufladbaren Batterie (14) und des Wandlers (16) mit einem Kühlfluid (32), das dazu geeignet ist, einen Phasenwechsel zu vollziehen, wenn es durch mindestens eines von der wiederaufladbaren Batterie (14) und dem Wandler (16) erwärmt wird;
eine Steuerung zum Steuern des Batteriespeichersystems (10) ;
wobei der Kühlkreislauf (18) eine Kühlkomponente (52) für die wiederaufladbare Batterie (14) und eine Kühlkomponente (38) für den Wandler (16) miteinander verbindet;
wobei die wiederaufladbare Batterie aus einer Vielzahl von Batteriezellen (54) zusammengesetzt ist;
wobei die Kühlkomponente (52) für die wiederaufladbare Batterie (14) ein abgedichtetes Gehäuse (52) ist, in dem die Batteriezellen (54) und deren elektrische Verbindungen (56) untergebracht sind;
wobei die Batteriezellen (54) und die elektrischen Verbindungen (56) zumindest teilweise in das Kühlfluid (32) im abgedichteten Gehäuse (52) zur Zweiphasenkühlung eingetaucht sind;
wobei die Steuerung für folgende Vorgänge eingerichtet ist:
Ermitteln einer Temperatur der wiederaufladbaren Batterie (14) und einer Temperatur des Wandlers (16);
Steuern eines Kühlfluidstroms durch die wiederaufladbare Batterie (14) und den Wandler auf der Grundlage der Temperatur der wiederaufladbaren Batterie (14) und der Temperatur des Wandlers (16);
aktives Erwärmen des Kühlfluids (32), wenn die Temperatur der wiederaufladbaren Batterie (14) unter einer Schwellentemperatur liegt, wobei das Kühlfluid (32) durch Durchströmen des Wandlers (16), der zum Erzeugen von Abwärme gesteuert wird, erwärmt wird.

2. Batterieenergiespeichersystem (10) nach Anspruch 1,
wobei die Kühlkomponente (52) für die wiederaufladbare Batterie (14) parallel zur Kühlkomponente (38) für den Wandler (16) verbunden ist.

3. Batterieenergiespeichersystem (10) nach einem der vorhergehenden Ansprüche,
wobei der Wandler (16) einen Verdampfer als Kühlkomponente (38) umfasst, der in thermischem Kontakt mit Leistungshalbleiterelementen (40) des Wandlers (16) steht.

4. Batterieenergiespeichersystem (10) nach einem der vorhergehenden Ansprüche,
wobei der Kühlkreislauf (18) einen Durchflussregler (34) zum Regulieren einer Menge von Kühlfluid (32), die zur wiederaufladbaren Batterie (14) fließt, und einer Menge von Kühlfluid (32), die zum Wandler (16) fließt, umfasst.

5. Batterieenergiespeichersystem (10) nach einem der vorhergehenden Ansprüche,
wobei der Kühlkreislauf (18) eine Versorgungsleitung (58) umfasst, die eine Ausgangsleitung (42) der Kühlkomponente (38) des Wandlers (16) mit einer Eingangsleitung (37) der Kühlkomponente (52) der wiederaufladbaren Batterie (14) verbindet;
wobei mindestens ein Ventil (60, 62) in der Versorgungsleitung (58) zu dem Zweck angeordnet ist, einen Kühlfluidstrom durch die Versorgungsleitung (58) zu verhindern.

6. Batterieenergiespeichersystem (10) nach einem der vorhergehenden Ansprüche,
wobei der Kühlkreislauf (18) eine elektrische Heizung (50) stromaufwärts der Kühlkomponente (52) der wiederaufladbaren Batterie (14) umfasst.

7. Batterieenergiespeichersystem (10) nach einem der vorhergehenden Ansprüche,
wobei der Kühlkreislauf (18) eine Pumpe (28) zum Pumpen des Kühlfluids (32) durch die Kühlkomponente (52) der wiederaufladbaren Batterie (14) und die Kühlkomponente (38) des Wandlers (16) umfasst.

8. Batterieenergiespeichersystem (10) nach einem der vorhergehenden Ansprüche,
wobei der Kühlkreislauf (18) einen Kondensator (48) zum Verflüssigen von verdampftem Kühlfluid (32) aus der Kühlkomponente (52) der wiederaufladbaren Batterie (14) und der Kühlkomponente (38) des Wandlers (16) umfasst.

9. Elektrofahrzeug (24), umfassend:
ein Batterieenergiespeichersystem (10) nach einem der vorhergehenden Ansprüche;
einen Antrieb (26), der vom Wandler (16) mit elektrischem Strom aus der wiederaufladbaren Batterie (14) versorgt wird.

10. Photovoltaisches System (12), umfassend:
ein Batterieenergiespeichersystem (10) nach einem der Ansprüche 1 bis 9;
eine Photovoltaikplatte (20), die die wiederaufladbare Batterie (14) über den Wandler (16) mit elektrischem Strom versorgt.

11. Verfahren zum Steuern des Batterieenergiespeichersystems (10) nach einem der Ansprüche 1 bis 8, wobei das Verfahren umfasst:
Ermitteln einer Temperatur der wiederaufladbaren Batterie (14) und einer Temperatur des Wandlers (16);
Steuern eines Kühlfluidstroms durch die wiederaufladbare Batterie (14) und den Wandler auf der Grundlage der Temperatur der wiederaufladbaren Batterie (14) und der Temperatur des Wandlers (16);
aktives Erwärmen des Kühlfluids (32), wenn die Temperatur der wiederaufladbaren Batterie (14) unter einer Schwellentemperatur liegt,
**dadurch gekennzeichnet, dass** das Kühlfluid (32) durch Durchströmen des Wandlers (16), der zum Erzeugen von Abwärme gesteuert wird, erwärmt wird.

12. Verfahren nach Anspruch 11, ferner umfassend:
Steuern einer Menge von Kühlfluid (32), die zur wiederaufladbaren Batterie (14) fließt, auf der Grundlage der Temperatur der wiederaufladbaren Batterie (14);
Steuern einer Menge von Kühlfluid (32), die durch den Wandler (16) fließt, auf der Grundlage der Temperatur des Wandlers (16).

13. Verfahren nach Anspruch 11 oder 12,
wobei das Kühlfluid (32) mit einer elektrischen Heizung (50) erwärmt wird, die mit elektrischer Energie aus der wiederaufladbaren Batterie (14) versorgt wird.

## Revendications

1. Système de stockage d'énergie à batterie (10), comprenant :
une batterie rechargeable (14) ;
un convertisseur (16) pour convertir un courant CC from la batterie rechargeable (14) en un courant destiné à être fourni à une charge (22, 26) et pour convertir un courant provenant d'une source (20, 22, 26) en un courant CC destiné à être fourni à la batterie rechargeable (14) ;
un circuit de refroidissement fermé (18) pour refroidir la batterie rechargeable (14) et le convertisseur (16) avec un fluide de refroidissement (32) adapté pour réaliser un changement de phase, lorsqu'il est chauffé par au moins un de la batterie rechargeable (14) et le convertisseur (16) ;
un dispositif de commande pour commander le système de stockage à batterie (10) ;
dans lequel le circuit de refroidissement (18) interconnecte un composant de refroidissement (52) pour la batterie rechargeable (14) et un composant de refroidissement (38) pour le convertisseur (16) ;
dans lequel la batterie rechargeable est composé d'une pluralité de cellules de batterie (54) ;
dans lequel le composant de refroidissement (52) pour la batterie rechargeable (14) est un logement scellé (52), dans lequel les cellules de batterie (54) et leurs interconnexions électriques (56) sont logées ;
dans lequel les cellules de batterie (54) et les interconnexions électriques (56) sont au moins partiellement immergé dans le fluide de refroidissement (32) dans le logement scellé (52) pour refroidissement à deux phases ; dans lequel le dispositif de commande est adapté pour :
déterminer a température de la batterie rechargeable (14) et a température du convertisseur (16) ;
commander un écoulement de fluide de refroidissement à travers la batterie rechargeable (14) et le convertisseur sur la base de la température de la batterie rechargeable (14) et la température du convertisseur (16) ;
activement chauffer le fluide de refroidissement (32), lorsque la température de la batterie rechargeable (14) est inférieure à une température de seuil, dans lequel le fluide de refroidissement (32) est chauffé en s'écoulant à travers le convertisseur (16), qui est commandé pour générer de la chaleur perdue.

2. Système de stockage d'énergie à batterie (10) selon la revendication 1,
dans lequel le composant de refroidissement (52) pour la batterie rechargeable (14) est connecté en parallèle au composant de refroidissement (38) pour le convertisseur (16).

3. Système de stockage d'énergie à batterie (10) selon l'une des revendications précédentes,
dans lequel le convertisseur (16) comprend un évaporateur en tant que composant de refroidissement (38), qui est en contact thermique avec des éléments semi-conducteurs de puissance (40) du convertisseur (16).

4. Système de stockage d'énergie à batterie (10) selon l'une des revendications précédentes,
dans lequel le circuit de refroidissement (18) comprend un régulateur de débit (34) pour réguler une quantité de fluide de refroidissement (32) s'écoulant vers la batterie rechargeable (14) et une quantité de fluide de refroidissement (32) s'écoulant vers le convertisseur (16).

5. Système de stockage d'énergie à batterie (10) selon l'une des revendications précédentes,
dans lequel le circuit de refroidissement (18) comprend une ligne d'alimentation (58) interconnectant une ligne de sortie (42) du composant de refroidissement (38) du convertisseur (16) avec an ligne d'entrée (37) du composant de refroidissement (52) de la batterie rechargeable (14) ;
dans lequel au moins un valve (60, 62) est agencée dans la ligne d'alimentation (58) pour empêcher un écoulement de fluide de refroidissement à travers la ligne d'alimentation (58).

6. Système de stockage d'énergie à batterie (10) selon l'une des revendications précédentes,
dans lequel le circuit de refroidissement (18) comprend un dispositif chauffant électrique (50) en amont du composant de refroidissement (52) de la batterie rechargeable (14).

7. Système de stockage d'énergie à batterie (10) selon l'une des revendications précédentes,
dans lequel le circuit de refroidissement (18) comprend une pompe (28) pour pomper le fluide de refroidissement (32) à travers le composant de refroidissement (52) de la batterie rechargeable (14) et le composant de refroidissement (38) du convertisseur (16).

8. Système de stockage d'énergie à batterie (10) selon l'une des revendications précédentes,
dans lequel le circuit de refroidissement (18) comprend un condenseur (48) pour liquéfier un fluide de refroidissement évaporé (32) provenant du composant de refroidissement (52) de la batterie rechargeable (14) et du composant de refroidissement (38) du convertisseur (16).

9. Véhicule électrique (24), comprenant :
un système de stockage d'énergie à batterie (10) selon une des revendications précédentes ;
un groupe moteur (26) alimenté, par le convertisseur (16), en puissance électrique provenant de la batterie rechargeable (14).

10. Système photovoltaïque (12), comprenant :
un système de stockage d'énergie à batterie (10) selon l'une des revendications 1 à 9 ;
un panneau photovoltaïque (20) alimentant la batterie rechargeable (14) en puissance électrique par l'intermédiaire du convertisseur (16).

11. Procédé pour commander le système de stockage d'énergie à batterie (10) de l'une des revendications 1 à 8, le procédé comprenant :
la détermination d'une température de la batterie rechargeable (14) et d'une température du convertisseur (16) ;
la commande d'un écoulement de fluide de refroidissement à travers la batterie rechargeable (14) et le convertisseur sur la base de la température de la batterie rechargeable (14) et de la température du convertisseur (16) ;
le chauffage actif du fluide de refroidissement (32), lorsque la température de la batterie rechargeable (14) est inférieur à une température de seuil,
**caractérisé en ce que** le fluide de refroidissement (32) est chauffé en s'écoulant à travers le convertisseur (16), qui est commandé pour générer chaleur perdue.

12. Procédé de la revendication 11, comprenant en outre :
la commande d'une quantité de fluide de refroidissement (32) s'écoulant vers la batterie rechargeable (14) sur la base de la température de la batterie rechargeable (14) ;
la commande d'une quantité de fluide de refroidissement (32) s'écoulant à travers le convertisseur (16) sur la base de la température du convertisseur (16).

13. Procédé de la revendication 11 ou 12,
dans lequel le fluide de refroidissement (32) est chauffé avec un dispositif chauffant électrique (50), qui est alimenté en énergie électrique provenant de la batterie rechargeable (14).
